# EUROPÄISCHE PATENTSCHRIFT

(11) **EP 1 891 400 B1**
(45) Veröffentlichungstag und Bekanntmachung des Hinweises auf die Patenterteilung: **08.01.2014**
(21) Anmeldenummer: 06829078.2
(22) Anmeldetag: 21.11.2006
(51) Int. Cl.: G01F 15/02, G01F 1/66

(54) **ULTRASCHALLMESSSTRECKE AUS KUNSTSTOFF UND ENTSPRECHENDES MESSVERFAHREN**
ULTRASOUND MEASURING SECTION MADE FROM PLASTIC AND CORRESPONDING MEASURING METHOD
SECTION DE MESURE À ULTRASONS EN PLASTIQUE ET PROCÉDÉ DE MESURE CORRESPONDANT.

(30) Priorität: 06.12.2005 CH 19212005
(43) Veröffentlichungstag der Anmeldung: 27.02.2008
(73) Patentinhaber: DIGMESA AG, 2563 Ipsach (CH)
(72) Erfinder: RICKLI, André, CH-2504 Biel (CH)
(74) Vertreter: Lempert, Jost
(86) Internationale Anmeldenummer: PCT/EP2006/011123
(87) Internationale Veröffentlichungsnummer: WO 2007/065557

(56) Entgegenhaltungen:
- EP-A1- 0 223 123
- EP-A1- 1 413 858
- DE-A1- 10 120 355
- DE-A1- 19 944 411
- JP-A- 9 287 989
- US-A- 5 627 323

## Beschreibung

Die Erfindung betrifft ein Verfahren zur Herstellung einer Ultraschallmessstrecke nach dem Oberbegriff des Anspruchs 1, eine Ultraschallmessstrecke nach dem Oberbegriff des Anspruchs 6 sowie ein Verfahren zur Durchflussmessung nach dem Oberbegriff des Anspruchs 14.

Als wichtiges Verfahren für die Bestimmung des Durchflusses in technischen Anwendungen hat sich das Laufzeitdifferenzverfahren entwickelt. Das Laufzeitdifferenzverfahren macht sich die Tatsache zu Nutze, dass die Ausbreitungsgeschwindigkeit eines Ultraschallsignals von der Strömungsgeschwindigkeit des Mediums, in dem es sich ausbreitet, abhängig ist. Entsprechend bewegt sich das Ultraschallsignal entgegen der Flussrichtung langsamer als in Flussrichtung. Die technische Umsetzung erfolgt durch die Verwendung zweier Ultraschallwandler mit möglichst identischer Übertragungsfunktion. Um die Laufzeitdifferenz zu ermitteln, wird ein Ultraschallimpuls durch das Medium in Strömungsrichtung gesendet, ein zweiter in entgegengesetzter Richtung. Beide Sensoren arbeiten dabei abwechselnd als Sender und Empfänger.

Viele bekannte Messgeräte aus Kunststoff verwenden eine sogenannte kolineare Anordnung der für die Messung benötigten Ultraschallwandler, d.h. die Schallwandler sind einander direkt gegenüberliegend angeordnet. Dies hat zur Folge, dass die Strömungsführung nicht gerade sein kann, sondern beispielsweise u-förmig in die Messkammer mit der kolinearen Anordnung angekoppelt sein muss, und dafür kann keine entformbare Spritzgussform hergestellt werden. Die muss vielmehr aus zwei oder mehreren Teilen hergestellt und zusammengeschweißt werden. Dies wurde beispielsweise in WO-A1-94/21989 vorgeschlagen, wobei die Messstrecke in einer U-Form ausgebildet ist. Nachteilig daran ist, dass sie aus mehreren Teilen zusammengeschweißt werden müssen, was unweigerlich zu Schweißnähten in der Messstrecke führt. Diese sind als Partikelfallen nicht erwünscht.

Aus der DE-A01-39 41 544 ist ein Ultraschallmessgerät bekannt, bei dem Ultraschallwellen einen "W"-förmigen Strahlenweg zwischen zwei Signalwandlern durchlaufen. Die Schallwellen werden zuerst an der unteren Wand des Rohres, danach an der oberen Wand, und zuletzt wieder an der unteren Wand des Rohres reflektiert. Ein Teil der Schallwellen durchläuft einen Weg mit nur einer einzigen Reflexion an der unteren Wand des Rohres. Diese Schallwellen werden durch Anbringung eines Dämpfers an der unteren Wand gedämpft.

Die EP-B1-0 521 855 beschreibt einen ähnlichen Durchflussmesser. Die Reflexionsflächen sind jedoch gekrümmt, so dass die Schallwellen fokussiert werden. Die untere Rohrwand hat eine defokussierende Reflexionsfläche zwischen den fokussierenden Flächen. Hierbei wird der Teil der Schallwellen, der in einem "V"-förmigen Weg das Messrohr durchläuft, gedämpft. Aber auch mit diesen Maßnahmen wird das akustische Signal durch den Durchflussmesser stark gedämpft und der Empfangs-Signalwandler erhält ein schwaches Signal, das von den Schallwellen überlagert ist, die dem "V"-förmigen Weg durch das Rohr gefolgt sind. Wenn der Signalwandler ein schwaches Signal empfängt, ist er störempfindlich. Dies gilt sowohl für mechanische Geräusche als auch für elektromagmetisches Rauschen.

In EP-A1-0 538 930 ist ein Messrohr dargestellt, dessen Wand im Querschnitt einen ellipsenförmigen Verlauf aufweist. An den Brennpunkten der Ellipse sind ein Ultraschallsender und ein Ultraschallempfänger angeordnet. In der Mitte des Messrohres erstreckt sich in Längsrichtung ein als Hindernis ausgebildeter Einsatz mit einem Profil, das entweder ebenfalls als Ellipse ausgebildet ist oder ellipsenartig mit einer in Strömungsrichtung weisenden Spitze. Mit diesem Einsatz soll verhindert werden, dass Ultraschall direkt von Sender zum Empfänger gelangt, ohne an den Wänden des Messrohres reflektiert zu werden. Der Ultraschallsender und der Ultraschallempfänger sind auf der axialen Mittelachse des Messrohres angeordnet.

Ein Nachteil der genannten, herkömmlichen Konstruktionen ist die Neigung zur Blasen- oder Partikelfalle. Insbesondere bei den eingangs genannten Schriften sind die Ausbuchtungen oder Ecken vorhanden, in denen sich die Blasen und Partikel verfangen können und so die Messung verfälschen. Gleichzeitig neigen viele der strömungstechnisch ungünstig eckigen Einlassstellen durch Verunreinigungen zum Verschlammen.

Die DE 199 44 411 A1 zeigt einen Ultraschall-Durchflussmesser mit einem Messrohr, in welchem Ultraschallwandler in Bohrungen in der Rohrwand eingesetzt sind. Die Ultraschallwandler sind in axialer Richtung versetzt und diagonal gegenüberliegend zueinander angeordnet. Das Messrohr weist einen rohrförmigen Einsatz auf, der ausgehend von einer Stirnseite des Messrohres zu einem Messkanal verjüngt, der im Querschnitt eine längliche ovale Form aufweist. Der Einsatz weist verdickte Endbereiche auf, an denen jeweils diagonal gegenüberliegend zu einem Wandler Abschrägungen angeordnet sind, in welchen Reflektoren eingebettet sind. Der Strahl wird demgemäß von einem der Wandler senkrecht zur Rohrachse in das Innere des Rohres eingestrahlt, unter einem der Abschrägung entsprechenden Winkel in schräg axialer Richtung reflektiert und am Reflektor der anderen Abschrägung auf den anderen Reflektor reflektiert. Nachteilig an dieser Anordnung ist insbesondere, dass sie sehr aufwändig ausgestaltet und herzustellen ist. Im Prinzip besteht sie aus drei konstruktiven Teilen, abgesehen von Wandlern und Reflektoren, die zusammen bzw. ineinander gefügt werden müssen. Damit die fluiddurchströmte Messstrecke gegenüber dem Außenrohr abgedichtet wird, muss beim Zusammenbau des Einsatzes zusätzlich auf Dichtigkeit geachtet werden.

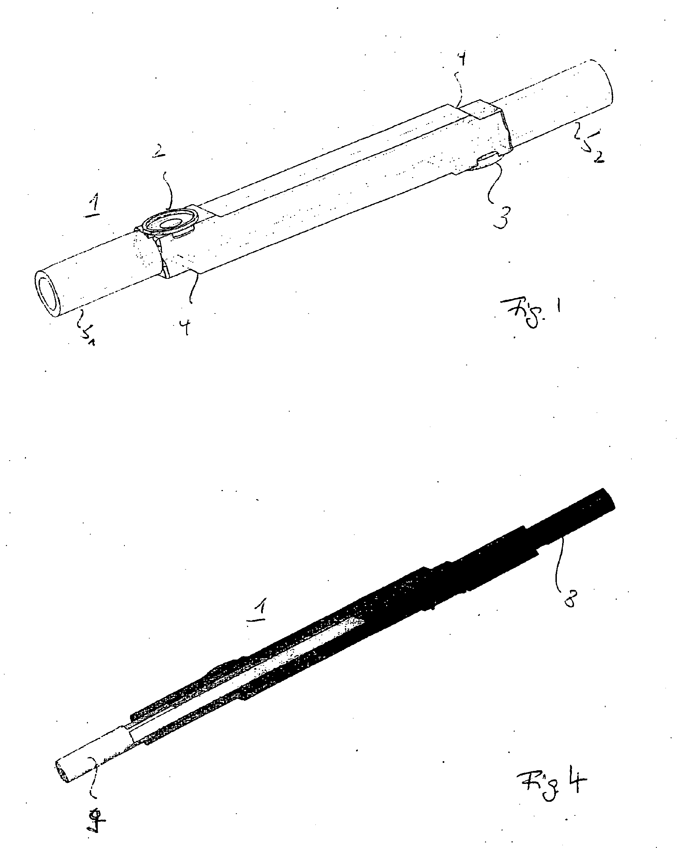

Die EP 1 413 858 A1 zeigt einen Ultraschalldurchflussmesser, bei welchem das Messrohr auch aus Kunststoff hergestellt sein kann. Wie insbesondere aus Fig. 1 ersichtlich, ist eine direkte Messübertragung des Ultraschallsignals ohne eine zwischengelegte Reflexion an schrägen Wandungsbereichen vorzunehmen. Aus den Figuren ist erkennbar, dass - sollte das Messrohr aus Kunststoff bestehen - das Messrohr nicht aus sich zwei erweiternden Schiebern, die auf verschiedenen Seiten der Messstrecke herausgezogen werden, herstellbar ist, da bei dem Messrohr im Bereich der Wandabschrägungen Hinterschneidungen in zwei Richtungen vorgesehen sind. Damit wäre jeder Schieber, wenn er denn als solcher eingesetzt werden würde, von vornherein blockiert und nicht mehr aus der fertigen Messstrecke herausziehbar. Somit muss die Messstrecke aus zwei jeweils eine Hälfte des Messrohrs bildenden Schalen hergestellt werden, welche dicht miteinander zu verbinden sind, insbesondere durch Verschweißen oder durch Verkleben. Hierdurch würden aber wiederum die bereits benannten Nachteile entstehen.

Der Erfindung liegt die Aufgabe zugrunde, ein Verfahren zur Herstellung einer Ultraschallmesstrecke zur Durchflussmessung zu schaffen, bei welcher die konstruktive Ausgestaltung einfach und der Herstellungsaufwand klein ist.

Die Aufgabe wird erfindungsgemäß zunächst durch ein Verfahren zur Herstellung einer Ultraschallmessstrecke mit dem kennzeichnenden Merkmal des Anspruchs 1 gelöst. Weiterhin sieht die Erfindung eine Ultraschallmessstrecke mit den Merkmalen des Anspruchs 6 und ein Verfahren zur Durchflussmessung mit den Merkmalen des Anspruchs 14 vor.

Wesentlich ist einlaüfig die Treppenform der Messstrecke. Vorteilhafte Ausführungsformen sind in den Unteransprüchen angegeben.

Ein Vorteil der Messstrecke liegt darin, dass sich die Messstrecke aus einem Stück durch Spritzguss herstellen lässt, da durch den Einsatz von zwei Schiebern eine Entformung des Werkstücks möglich ist. Es sind keine Schweißnähte, also keine potentiellen Partikelfallen vorhanden. Weiter können sich Luft- oder Gasblasen in Flüssigkeiten schwer festsetzen und werden die Messstrecke schnell passieren, was Messverfälschungen weitgehend vermeidet.

Als Reflektoren dienen vorzugsweise je nach Beschaffenheit des verwendeten Kunststoffes die Außenwandung (Reflektion an der die Messstrecke umgebende Luft), die Innenwandung (Reflektion am Kunststoff der Messstrecke), ein an der Außenwandung angebrachter oder ein als Einlegeteil im Kunststoff eingespritzter Reflektor aus geeignetem Material, beispielsweise aus Metall, für die benötigte Reflektion. Sofern die Kunststoffwandung durchdrungen werden muss, ist die zu durchdringende Kunststoffwandung über den ganzen Bereich der Reflektoren vorteilhaft gleich dick.

Die Erfindung wird anhand der beigefügten Figuren näher erläutert. Dabei zeigt bzw. zeigen:
- Fig. 1: eine Ansicht einer erfindungsgemäßen Ultraschallmessstrecke mit Ultraschallsende- und -empfangswandler und Reflektoren;
- Fig. 2a: einen Schnitt durch eine erfindungsgemäße Ultraschallmessstrecke mit dem zurückgelegten Weg des Schalls;
- Fig. 2b: die Seitenansicht von Fig. 2a, in der die einlaüfig treppenförmige Ausführungsform der erfindungsgemäßen Ultraschallmessstrecke deutlich wird;
- Fig. 3: einen Schnitt durch eine erfindungsgemäße Ultraschallmessstrecke während der Herstellung durch zwei Schieber;
- Fig. 4: eine Ansicht der beiden Schieber, die zur Herstellung der erfindungsgemäßen Messstrecke verwendet werden;
- Fig. 5a-d: vier verschiedene Weisen einen Reflektor an die Messtrecke anzubringen; und
- Fig. 6a-d: entsprechen den Fig. 5a - d, wobei jedoch in jede Ausführungsform zusätzlich mit einem Radius, an der Stelle, an der sich der Reflektor befindet, ausgestattet ist.

Die Fig. 1 zeigt eine Ansicht einer erfindungsgemäßen Ultraschallmessstrecke 1 mit zwei in Strömungsrichtung des Fluids beabstandeten Ultraschallsende- und - empfangswandlern 2, 3. Der von den Sendewandlern 2, 3 emittierte Schall wird durch die Messstrecke 1 über zwei Reflektoren geleitet, bevor er wieder von dem zweiten Sendewandler 3, 2 aufgenommen werden. Um die Laufzeitdifferenz und damit die Strömungsgeschwindigkeit zu ermitteln, wird ein Ultraschallimpuls durch das Medium in Strömungsrichtung gesendet, ein zweiter in entgegengesetzter Richtung. Beide Sensoren 2, 3 arbeiten dabei abwechselnd als Sender und Empfänger. An beiden Enden weist die Ultraschallmessstrecke 1 zwei Anschlussteile 51, 52 auf, die in dem gezeigten Ausführungsbeispiel rund ausgestaltet sind. An den Anschlussteilen 51, 52 wird die Messstrecke an nicht dargestellte externe Geräte angeschlossen, die das Fluid durch die Messstrecke 1 leiten. Die Ultraschallmessstrecke 1 ist mit einem Spritzgussverfahren aus einem Stück hergestellt. Sie kann beispielsweise aus hochreinem Teflon hergestellt werden. Mit der Ultraschallmessstrecke 1 können beispielsweise der Durchfluss von Gasen oder Flüssigkeiten gemessen werden. Die an die Messstrecke 1 angeschlossene Auswerteelektronik wird sich nicht in dem Stand der Technik bekannten unterscheiden.

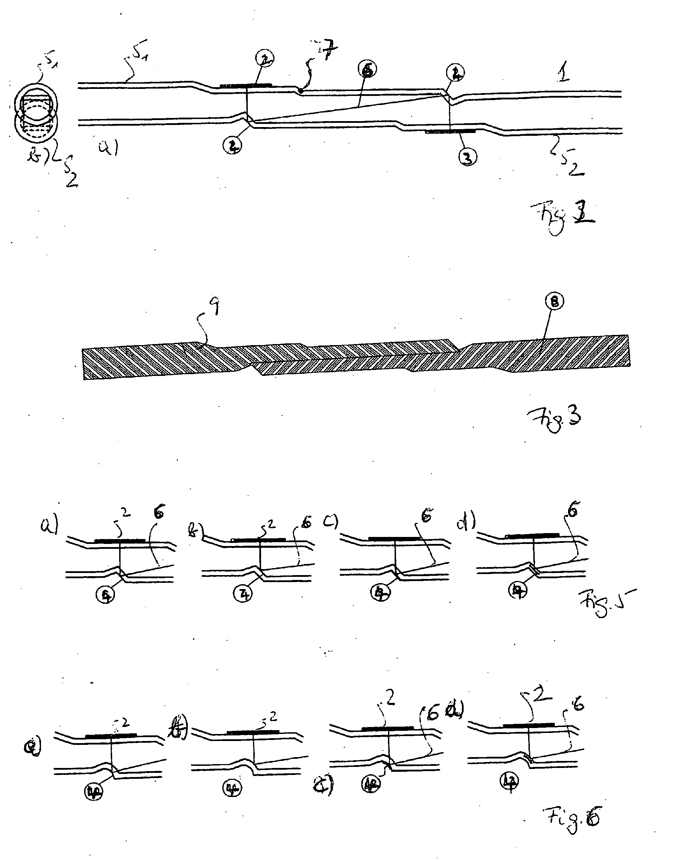

Fig. 2a zeigt dabei einen Schnitt durch eine erfindungsgemäße Ultraschallstrecke 1 mit den genannten Elementen Ultraschallende- und -empfangswandlern 2, 3 und Reflektoren 4. Der Weg des Ultraschalls in der Messstrecke 1 wird mit Bezugszeichen 5 bezeichnet. Die Messstrecke 1 ist erfindungsgemäß als einlaüfig treppenförmig angelegter Durchgang ausgeführt. Fig. 2b verdeutlicht die Seitenansicht von Fig. 2a, in der die treppenförmige Ausführungsform der erfindungsgemäßen Ultraschallmessstrecke sichtbar ist. An Abschrägungen des Durchgangs befinden sich die mindestens zwei Reflektoren 4, die den von den Ultraschallsende- und -empfangswandlern 2, 3 reflektieren und weiterleiten. Die erfindungsgemäße Messstrecke 1 besteht aus einem einzigen Spritzgussteil und weist einen geraden Durchgang für das Fluid auf. Somit befinden sich in der Messstrecke 1 keine Blasen- oder Partikelfallen, die die Durchflussmessung verfälschen könnten. Interferenzen im Messsignal können so ausgeschlossen werden. Wie in der Fig. 2a deutlich sichtbar wird somit der Schall zwischen den Sende- und empfangswandlern 2, 3 über die zwei Reflektoren 4 z-förmig durch den einlaüfig treppenförmigen Durchgang / die Messstrecke 1 geleitet. Gleichzeitig kann sich in der Wandung der Messstrecke 1 ein Temperaturmesssensor 7 befinden, der es erlaubt, die Temperatur bei der Auswertung der Messdaten mit einfließen zu lassen.

Das Verfahren zur Herstellung einer erfindungsgemäßen Messstrecke 1 wird in den Fig. 3 und 4 schematisch dargestellt. In einem ersten Schritt werden zwei sich erweiternde Schieber 8, 9 aneinandergelegt. Die beiden Schieber 8, 9 bilden zusammen die einlaüfig treppenförmige Kontur der Messstrecke 1. Die Messstrecke 1 wird durch Spritzguss um die Schieber 8, 9 herumgestellt. Danach können die beiden Schieber 8, 9 jeweils auf einer verschiedenen Seite der Messstrecke 1 herausgezogen werden. Fig. 3 illustriert einen Schnitt durch eine erfindungsgemäße Ultraschallmessstrecke 1 während der Herstellung durch zwei Schieber 8, 9. Alle Elemente, die außerhalb der Messstrecke 1 angebracht werden müssen, können im nächsten Schritt angebracht werden: Ultraschallsende- und -empfangswandler 2, 3, Temperaturmesssensor 7 und eventuell von außen anzubringende Reflektoren 4.

In der vorliegenden Erfindung dienen je nach Beschaffenheit des verwendeten Kunststoffes die Außenwandung (Fig. 5a, Reflektion an der die Messstrecke umgebende Luft), die Innenwandung (Fig. 5b, Reflektion am Kunststoff der Messstrecke 1), ein an der Außenwandung angebrachter (Fig. 5c) oder ein als Einlegeteil im Kunststoff eingespritzter Reflektor (Fig. 5d) aus geeignetem Material, beispielsweise aus Metall, für die benötigte Reflektion. Das geeignete Material muss selbstverständlich auf die akustischen Eigenschaften des jeweils verwendeten Kunststoffs individuell abgestimmt werden. Die vorliegende Erfindung verwendet somit keine Reflektoren aus Metall, die medienberührend sind. Sofern die Kunststoffwandung durchdrungen werden muss, ist die zu durchdringende Kunststoffwandung über den ganzen Bereich der Reflektoren vorteilhaft gleich dick.

Um Fertigungstoleranzen auszugleichen und temperaturbedingte Längenänderungen der Messstrecke 1 auszugleichen, können die Reflektoren einen Radius aufweisen, was jedoch zu einem abgeschwächten Empfangssignal führt. Die Größe des Radius ist abhängig von den jeweils verwendeten Materialien. Die Ausführungsformen der Fig. 6a bis Fig. Fig. 6d entspricht den Ausführungsformen der Fig. 5a bis 5d, wobei jedoch eine entsprechende Ausführungsform zusätzlich mit einem Radius ausgestattet ist.

## Patentansprüche

1. Verfahren zur Herstellung einer Ultraschallmessstrecke (1), bestehend aus folgenden Verfahrensschritten:
(a) zwei sich erweiternde Schieber (8, 9), die zusammen eine einläufig treppenförmige Kontur bilden werden aneinandergelegt,
(b) die Messstrecke (1) wird durch Spritzguss um die Schieber (8, 9) herum hergestellt, und
(c) die beiden Schieber (8, 9) werden auf verschiedenen Seiten der Messstrecke (1) herausgezogen.

2. Verfahren zur Herstellung einer Ultraschallmessstrecke nach Anspruch 1, **dadurch gekennzeichnet, dass** danach Ultraschallsende- und -empfangswandler (2, 3) außerhalb der Messstrecke (1) angebracht werden.

3. Verfahren zur Herstellung einer Ultraschallmessstrecke (1) gemäß Anspruch 1 oder 2, **dadurch gekennzeichnet, dass** Reflektoren (4) außerhalb oder innerhalb der Messstrecke (1) angebracht werden oder in die Wandung der Messstrecke (1) eingespritzt werden.

4. Verfahren zur Herstellung einer Ultraschallmessstrecke (1) gemäß Anspruch 1 bis 3, **dadurch gekennzeichnet, dass** die Messstrecke (1) aus hochreinem Teflon hergestellt wird.

5. Verfahren zur Herstellung einer Ultraschallmessstrecke (1) gemäß Anspruch 1 bis 4, **dadurch gekennzeichnet, dass** an der Messstrecke (1) ein Temperatursensor (7) angebracht wird.

6. Ultraschallmessstrecke (1) zur Durchflussmessung von Fluiden hergestellt nach einem Verfahren nach den Ansprüchen 1 bis 5, mit einem vom Fluid durchströmten Durchgang und mit zwei in Strömungsrichtung des Fluids beabstandeten Ultraschallende- und -empfangswandlern (2, 3), wobei der Schall zwischen den Sende- und -empfangswandlern (2, 3) über mindestens zwei Reflektoren (4) z-förmig führbar ist, dass die Messstrecke (1) aus einem Stück aus Kunststoff besteht, dass die Messstrecke eine einlaüfig treppenförmige Kontur aufweist und dass die Reflektoren sich an Abschrägungen der Wandung des Durchgangs befinden.

7. Ultraschallmessstrecke nach Anspruch 6, **dadurch gekennzeichnet, dass** sich die mindestens zwei Reflektoren (4) an Abschrägungen des Durchgangs befinden.

8. Ultraschallmessstrecke nach einem der Ansprüche 6 bis 7, **dadurch gekennzeichnet, dass** die Messstrecke (1) aus Teflon hergestellt ist.

9. Ultraschallmessstrecke nach einem der Ansprüche 6 bis 8, **dadurch gekennzeichnet, dass** die Messstrecke (1) durch Spritzguss hergestellt ist.

10. Ultraschallmessstrecke nach einem der Ansprüche 6 bis 9, **dadurch gekennzeichnet, dass** die Reflektoren (4) aus Metall, Luft oder Kunststoff bestehen.

11. Ultramessstrecke nach einem der Ansprüche 6 bis 10, **dadurch gekennzeichnet, dass** sich die Reflektoren (4) an der Innenseite oder an der Außenseite der Messstrecke (1) befinden oder in die Wandung der Messstrecke (1) eingespritzt sind.

12. Ultraschallmessstrecke nach einem der Ansprüche 6 bis 11, **dadurch gekennzeichnet, dass** die Wandung der Ultraschallmessstrecke (1) an der sich ein Reflektor (4) befindet, einen Radius aufweist.

13. Ultraschallmessstrecke nach einem der Ansprüche 6 bis 12, **dadurch gekennzeichnet, dass** ein Temperatursensor (7) an der Messstrecke (1) angebracht ist.

14. Verfahren zur Durchflussmessung eines Fluids mit einer nach einem Verfahren gemäß einem der Ansprüche 1 bis 13 hergestellten Durchflussmessstrecke (1), wobei der Schall zwischen Sende- und -empfangswandlern (2, 3) über mindestens zwei Reflektoren (4) z-förmig geleitet wird, **dadurch gekennzeichnet, dass** das Fluid durch einen Durchgang eines einstückigen Kunststoffteils geleitet wird, dass die Messstrecke eine einläufig treppenförmige Kontur aufweist und dass der Schall an Abschrägungen der Wandung des Durchgangs reflektiert wird.

15. Verfahren zur Durchflussmessung nach Anspruch 14, **dadurch gekennzeichnet, dass** der Schall über einen Reflektor (4) aus Metall, Luft oder Kunststoff geführt wird.

16. Verfahren zur Durchflussmessung gemäß einem der Ansprüche 14 bis 15, **dadurch gekennzeichnet, dass** der Durchfluss von Gasen oder Flüssigkeiten gemessen wird.

17. Verfahren zur Durchflussmessung gemäß einem der Ansprüche 14 bis 16, **dadurch gekennzeichnet, dass** zusätzlich zu der Durchflussmessung die Temperatur des Fluids gemessen wird.

18. Verfahren zur Durchflussmessung gemäß einem der Ansprüche 14 bis 17, **dadurch gekennzeichnet, dass** der Schall an einem Reflektor (4) geleitet wird, welcher innerhalb oder außerhalb der Messstrecke (1) angeordnet wird oder welcher in die Wandung der Messstrecke eingespritzt ist.

## Claims

1. Method for producing an ultrasound measuring section (1), comprising the following method steps:
(a) two widening slides (8, 9), which together form a single track staircase-like contour, are placed on each other,
(b) the measuring section (1) is produced by injection moulding around the slides (8, 9), and
(c) the two slides (8, 9) are pulled out on different sides of the measuring section (1).

2. Method for producing an ultrasound measuring section according to Claim 1, **characterized in that** ultrasound transducers (2, 3) are then fitted outside the measuring section (1).

3. Method for producing an ultrasound measuring section (1) according to Claim 1 or 2, **characterized in that** reflectors (4) are fitted outside or inside the measuring section (1) or injection-moulded into the wall of the measuring section (1).

4. Method for producing an ultrasound measuring section (1) according to Claims 1 to 3, **characterized in that** the measuring section (1) is produced from highly pure Teflon.

5. Method for producing an ultrasound measuring section (1) according to Claims 1 to 4, **characterized in that** a temperature sensor (7) is fitted to the measuring section (1).

6. Ultrasound measuring section (1) for measuring the flow of fluids, produced in accordance with a method according to Claims 1 to 5, having a passage through which fluid flows and having two ultrasound transducers (2, 3) spaced apart in the flow direction of the fluid, wherein the sound can be guided in a Z pattern between the transducers (2, 3) by at least two reflectors (4), wherein the measuring section (1) consists of plastic in one piece, wherein the measuring section has a single track staircase-like contour, and wherein the reflectors are located on chamfers of the wall of the passage.

7. Ultrasound measuring section according to Claim 6, **characterized in that** the at least two reflectors (4) are located on chamfers of the passage.

8. Ultrasound measuring section according to either of Claims 6 and 7, **characterized in that** the measuring section (1) is produced from Teflon.

9. Ultrasound measuring section according to one of Claims 6 to 8, **characterized in that** the measuring section (1) is produced by injection moulding.

10. Ultrasound measuring section according to one of Claims 6 to 9, **characterized in that** the reflectors (4) consist of metal, air or plastic.

11. Ultrasound measuring section according to one of Claims 6 to 10, **characterized in that** the reflectors (4) are located on the inside or on the outside of the measuring section (1) or are injection-moulded into the wall of the measuring section (1).

12. Ultrasound measuring section according to one of Claims 6 to 11, **characterized in that** the wall of the ultrasound measuring section (1) on which a reflector (4) is located has a radius.

13. Ultrasound measuring section according to one of Claims 6 to 12, **characterized in that** a temperature sensor (7) is fitted to the measuring section (1).

14. Method for measuring the flow of a fluid by using a flow measuring section (1) produced in accordance with one of Claims 1 to 13, the sound being led in a Z pattern between the transducers (2, 3) via at least two reflectors (4), **characterized in that** the fluid is led through a passage in a one-piece plastic part, **in that** the measuring section has a staircase-like contour on the inlet side, and **in that** the sound is reflected on chamfers on the wall of the passage.

15. Method for measuring flow according to Claim 14, **characterized in that** the sound is guided via a reflector (4) made of metal, air or plastic.

16. Method for measuring flow according to either of Claims 14 and 15, **characterized in that** the flow of gases or liquids is measured.

17. Method for measuring flow according to one of Claims 14 to 16, **characterized in that**, in addition to the flow measurement, the temperature of the fluid is measured.

18. Method for measuring flow according to one of Claims 14 to 17, **characterized in that** the sound is led on a reflector (4) which is arranged inside or outside the measuring section (1) or which is injection-moulded into the wall of the measuring section.

## Revendications

1. Procédé de réalisation d'une section de mesure à ultrasons (1), composé des étapes de procédé suivantes :
(a) juxtaposition de deux coulisseaux (8, 9) évasés formant ensemble un contour d'escalier à une volée ;
(b) réalisation, autour des coulisseaux (8, 9), de la section de mesure (1) par moulage par injection ; et
(c) dégagement des deux coulisseaux (8, 9) sur différents côtés de la section de mesure (1).

2. Procédé de réalisation d'une section de mesure à ultrasons selon la revendication 1, **caractérisé en ce que** des convertisseurs d'émission et de réception d'ultrasons (2, 3) sont ensuite placés à l'extérieur de la section de mesure (1).

3. Procédé de réalisation d'une section de mesure à ultrasons (1) selon la revendication 1 ou 2, **caractérisé en ce que** des réflecteurs (4) sont placés à l'extérieur ou à l'intérieur de la section de mesure (1) ou injectés dans la paroi de la section de mesure (1).

4. Procédé de réalisation d'une section de mesure à ultrasons (1) selon l'une quelconque des revendications 1 à 3, **caractérisé en ce que** la section de mesure (1) est fabriquée en téflon à haute pureté.

5. Procédé de réalisation d'une section de mesure à ultrasons (1) selon l'une quelconque des revendications 1 à 4, **caractérisé en ce qu'**un capteur de température (7) est placé au niveau de la section de mesure (1).

6. Section de mesure à ultrasons (1) servant à la mesure du débit de fluides fabriquée selon un procédé selon les revendications 1 à 5, avec un passage traversé de fluide et avec deux convertisseurs d'émission et de réception d'ultrasons (2, 3) espacés l'un par rapport à l'autre dans la direction d'écoulement du fluide, l'écho entre les convertisseurs d'émission et de réception (2, 3) pouvant être guidé selon une forme de z via au moins deux réflecteurs (4), la section de mesure (1) se composant d'une pièce en matière plastique, la section de mesure comportant un contour d'escalier à une volée et les réflecteurs étant positionnés au niveau des chanfreins de la paroi du passage.

7. Section de mesure à ultrasons selon la revendication 6, **caractérisée en ce que** les au moins deux réflecteurs (4) sont positionnés au niveau des chanfreins du passage.

8. Section de mesure à ultrasons selon l'une quelconque des revendications 6 à 7, **caractérisée en ce que** la section de mesure (1) est fabriquée en téflon.

9. Section de mesure à ultrasons selon l'une quelconque des revendications 6 à 8, **caractérisée en ce que** la section de mesure (1) est fabriquée par moulage par injection.

10. Section de mesure à ultrasons selon l'une quelconque des revendications 6 à 9, **caractérisée en ce que** les réflecteurs (4) sont en métal, en air ou en matière plastique.

11. Section de mesure à ultrasons selon l'une quelconque des revendications 6 à 10, **caractérisée en ce que** les réflecteurs (4) se trouvent sur le côté intérieur ou le côté extérieur de la section de mesure (1) ou sont injectés dans la paroi de la section de mesure (1).

12. Section de mesure à ultrasons selon l'une quelconque des revendications 6 à 11, **caractérisée en ce que** la paroi de la section de mesure à ultrasons (1) comportant un réflecteur (4) présente un certain rayon.

13. Section de mesure à ultrasons selon l'une quelconque des revendications 6 à 12, **caractérisé en ce qu'**un capteur de température (7) est placé au niveau de la section de mesure (1).

14. Procédé de mesure du débit d'un fluide, avec une section de mesure de débit (1) fabriquée selon un procédé selon l'une quelconque des revendications 1 à 13, l'écho entre les convertisseurs d'émission et de réception (2, 3) étant guidé en forme de z via au moins deux réflecteurs (4), **caractérisé en ce que** le fluide est guidé à travers un passage d'une pièce plastique réalisée d'un seul tenant, que la section de mesure comporte un contour d'escalier à une volée et que l'écho est réfléchi contre les chanfreins de la paroi du passage.

15. Procédé de mesure du débit selon la revendication 14, **caractérisé en ce que** l'écho est guidé via un réflecteur (4) en métal, en air ou en matière plastique.

16. Procédé de mesure du débit selon l'une quelconque des revendications 14 à 15, **caractérisé en ce que** le débit des gaz ou des fluides est mesuré.

17. Procédé de mesure du débit selon l'une quelconque des revendications 14 à 16, **caractérisé en ce que** la température du fluide est mesurée en sus de la mesure de débit.

18. Procédé de mesure du débit selon l'une quelconque des revendications 14 à 17, **caractérisé en ce que** l'écho est guidé contre un réflecteur (4) disposé à l'intérieur ou à l'extérieur de la section de mesure (1) ou injecté dans la paroi de la section de mesure.
